# EUROPEAN PATENT APPLICATION

(11) **EP 4 715 617 A1**
(43) Date of publication of application: **25.03.2026**
(21) Application number: 25202245.4
(22) Date of filing: 15.09.2025
(51) Int. Cl.: G06F 16/11, G06F 16/71

(54) **METHODS AND SYSTEMS FOR DATA RETENTION**

(30) Priority: 18.09.2024 US 202418888713
(71) Applicant: Genetec Inc., Saint-Laurent, Québec H4S 2A4 (CA)
(72) Inventor: CERESATO, Erick, Montreal, QC H3K 1Y6 (CA); RASHID, Mohammad Naimur, Montreal, QC H3M 2Y1 (CA)
(74) Representative: Kramer Barske Schmidtchen Patentanwälte PartG mbB

(57) **Abstract**

A method for data retention comprises obtaining, from a first retention system having a first retention policy associated therewith, surveillance data generated by surveillance of a location where a surveillance system is deployed, identifying a level of interest in the surveillance data, and, in response to identifying, based on the level of interest, that at least part of the surveillance data is of interest, causing the at least part of the surveillance data to be stored in a second retention system, the second retention system having associated therewith a second retention policy different from the first retention policy.

## Description

### FIELD

The improvements generally relate to surveillance systems, and more particularly to data retention in a surveillance system.

### BACKGROUND

Surveillance systems are typically composed of a variety of different devices that generate data as a site is being surveilled. Many surveillance systems include cameras or other devices which capture media data, for instance images or video data, as well as metadata, used in performing surveillance of the site. It is often desirable to archive the captured data for various purposes, including investigation in case of an incident or compliancy to regulations. Some circumstances may however require data to be archived for extended periods of time, which can significantly increase costs for the organization operating the surveillance system.

While existing surveillance systems are suitable for their purposes, there remains room for improvement.

### SUMMARY

The following presents a simplified summary of one or more implementations in accordance with aspects of the present disclosure, in order to provide a basic understanding of such implementations, without limiting the embodiments presented within the present disclosure. While existing surveillance systems and networks are suitable for their purposes, the costs associated with storage of media and related data generated by the surveillance system (e.g., by media devices such as cameras, microphones, etc.) are typically prohibitive. In addition, it may prove challenging to archive data for an extended period of time (e.g., for investigation or compliance purposes) while complying with regulations or ordinances regarding data storage, particularly in jurisdictions that prohibit or restrict the retention of data beyond a predetermined duration. To this end, the present disclosure provides methods and systems for data retention in a surveillance system. Media stream data is generated by one or more media devices deployed on a local network, at a location being surveilled. The media stream data is stored in a first retention system having a first retention policy. Upon determining that the media stream data is of interest, it is moved to a second retention system having a second retention policy different from the first retention policy. In accordance with one aspect, there is provided a method for data retention. The method comprises obtaining, from a first retention system having a first retention policy associated therewith, surveillance data generated by surveillance of a location where a surveillance system is deployed, identifying a level of interest in the surveillance data, and, in response to identifying, based on the level of interest, that at least part of the surveillance data is of interest, causing the at least part of the surveillance data to be stored in a second retention system, the second retention system having associated therewith a second retention policy different from the first retention policy.

In at least one embodiment in accordance with any previous/other embodiment described herein, each of the first retention policy and the second retention policy is indicative of a time period for which the surveillance data is to be stored in a respective one of the first retention system and the second retention system.

In at least one embodiment in accordance with any previous/other embodiment described herein, the first retention policy is indicative of a first time period for which the surveillance data is to be stored in the first retention system, and the second retention policy is indicative of a second time period for which the surveillance data is to be stored in the second retention system, the second time period greater than the first time period.

In at least one embodiment in accordance with any previous/other embodiment described herein, each of the first retention policy and the second retention policy is indicative of a location of target storage media associated with a respective one of the first retention system and the second retention system.

In at least one embodiment in accordance with any previous/other embodiment described herein, each of the first retention policy and the second retention policy is indicative of at least one of access rights, corporate guidelines, and best practices associated with a respective one of the first retention system and the second retention system.

In at least one embodiment in accordance with any previous/other embodiment described herein, the first retention system has associated therewith a first data security protocol and the second retention system has associated therewith a second data security protocol, the second data security protocol different from the first data security protocol and indicative of an encryption scheme to be used to encrypt the at least part of the surveillance data prior to storage thereof in the second retention system.

In at least one embodiment in accordance with any previous/other embodiment described herein, the first retention policy is dictated by at least one legal requirement.

In at least one embodiment in accordance with any previous/other embodiment described herein, the first retention system is a security management system and the second retention system is an evidence management system.

In at least one embodiment in accordance with any previous/other embodiment described herein, the security management system is a video management system.

In at least one embodiment in accordance with any previous/other embodiment described herein, the first retention system has one of cloud-based storage media and local storage media associated therewith.

In at least one embodiment in accordance with any previous/other embodiment described herein, the second retention system has cloud-based storage media associated therewith.

In at least one embodiment in accordance with any previous/other embodiment described herein, the first retention system has local storage media associated therewith and the second retention system has cloud-based storage media associated therewith.

In at least one embodiment in accordance with any previous/other embodiment described herein, the level of interest is identified based on one or more metadata items associated with the surveillance data.

In at least one embodiment in accordance with any previous/other embodiment described herein, the at least part of the surveillance data is caused to be stored in the second retention system in association with the one or more metadata items.

In at least one embodiment in accordance with any previous/other embodiment described herein, the level of interest is identified based on one or more of a security system event from the surveillance system, a requirement to share the surveillance data with a third party external to the surveillance system, an identification of a given electronic device having generated the surveillance data, a geographic position of the given device, video analytics related to the surveillance data, and/or a timestamp.

In at least one embodiment in accordance with any previous/other embodiment described herein, identifying the level of interest comprises conducting a content analysis of the surveillance data.

In at least one embodiment in accordance with any previous/other embodiment described herein, the at least part of the surveillance data is identified to be of interest as a result of detecting, based on the content analysis, a presence of at least one individual and/or object at the monitored location.

In at least one embodiment in accordance with any previous/other embodiment described herein, the surveillance data is obtained from the first retention system and/or the level of interest is identified in response to occurrence, at the monitored location, of a system-initiated event.

In at least one embodiment in accordance with any previous/other embodiment described herein, the surveillance data comprises at least one of audio data, image data, video data, and text data.

In at least one embodiment in accordance with any previous/other embodiment described herein, causing the at least part of the surveillance data to be stored in the second retention system comprises copying the at least part of the surveillance data into the second retention system and preserving an original version of the surveillance data in the first data retention system in accordance with the first retention policy

In at least one embodiment in accordance with any previous/other embodiment described herein, causing the at least part of the surveillance data to be stored in the second retention system comprises transferring the at least part of the surveillance data from the first retention system to the second retention system.

In at least one embodiment in accordance with any previous/other embodiment described herein, transferring the at least part of the surveillance data comprises copying the at least part of the surveillance data from the first retention system to the second retention system and causing the at least part of the surveillance data to be deleted from the first retention system.

In accordance with another aspect, there is provided a system for data retention. The system comprises a processing unit and a non-transitory computer-readable medium having stored thereon program instructions executable by the processing unit for obtaining, from a first retention system having a first retention policy associated therewith, surveillance data generated by surveillance of a location where a surveillance system is deployed, identifying a level of interest in the surveillance data, and, in response to identifying, based on the level of interest, that at least part of the surveillance data is of interest, causing the at least part of the surveillance data to be stored in a second retention system, the second retention system having associated therewith a second retention policy different from the first retention policy.

In at least one embodiment in accordance with any previous/other embodiment described herein, each of the first retention policy and the second retention policy is indicative of a time period for which the surveillance data is to be stored in a respective one of the first retention system and the second retention system.

In at least one embodiment in accordance with any previous/other embodiment described herein, the first retention policy is indicative of a first time period for which the surveillance data is to be stored in the first retention system, and the second retention policy is indicative of a second time period for which the surveillance data is to be stored in the second retention system, the second time period greater than the first time period.

In at least one embodiment in accordance with any previous/other embodiment described herein, each of the first retention policy and the second retention policy is indicative of a location of target storage media associated with a respective one of the first retention system and the second retention system.

In at least one embodiment in accordance with any previous/other embodiment described herein, each of the first retention policy and the second retention policy is indicative of at least one of access rights, corporate guidelines, and best practices associated with a respective one of the first retention system and the second retention system.

In at least one embodiment in accordance with any previous/other embodiment described herein, the first retention system has associated therewith a first data security protocol and the second retention system has associated therewith a second data security protocol, the second data security protocol different from the first data security protocol and indicative of an encryption scheme to be used to encrypt the at least part of the surveillance data prior to storage thereof in the second retention system.

In at least one embodiment in accordance with any previous/other embodiment described herein, the first retention policy is dictated by at least one legal requirement.

In at least one embodiment in accordance with any previous/other embodiment described herein, the first retention system is a security management system and the second retention system is an evidence management system.

In at least one embodiment in accordance with any previous/other embodiment described herein, the security management system is a video management system.

In at least one embodiment in accordance with any previous/other embodiment described herein, the first retention system has one of cloud-based storage media and local storage media associated therewith.

In at least one embodiment in accordance with any previous/other embodiment described herein, the second retention system has cloud-based storage media associated therewith.

In at least one embodiment in accordance with any previous/other embodiment described herein, the first retention system has local storage media associated therewith and the second retention system has cloud-based storage media associated therewith.

In at least one embodiment in accordance with any previous/other embodiment described herein, the program instructions are executable by the processing unit for identifying the level of interest based on one or more metadata items associated with the surveillance data.

In at least one embodiment in accordance with any previous/other embodiment described herein, the program instructions are executable by the processing unit for causing the at least part of the surveillance data to be stored in the second retention system in association with the one or more metadata items.

In at least one embodiment in accordance with any previous/other embodiment described herein, the program instructions are executable by the processing unit for identifying the level of interest based on one or more of a security system event from the surveillance system, a requirement to share the surveillance data with a third party external to the surveillance system, an identification of a given electronic device having generated the surveillance data, a geographic position of the given device, video analytics related to the surveillance data, and/or a timestamp.

In at least one embodiment in accordance with any previous/other embodiment described herein, the program instructions are executable by the processing unit for identifying the level of interest comprising conducting a content analysis of the surveillance data.

In at least one embodiment in accordance with any previous/other embodiment described herein, the program instructions are executable by the processing unit for identifying the at least part of the surveillance data to be of interest as a result of detecting, based on the content analysis, a presence of at least one individual and/or object at the monitored location.

In at least one embodiment in accordance with any previous/other embodiment described herein, the program instructions are executable by the processing unit for obtaining the surveillance data from the first retention system and/or identifying the level of interest in response to occurrence, at the monitored location, of a system-initiated event.

In at least one embodiment in accordance with any previous/other embodiment described herein, the surveillance data comprises at least one of audio data, image data, video data, and text data.

In at least one embodiment in accordance with any previous/other embodiment described herein, the program instructions are executable by the processing unit for causing the at least part of the surveillance data to be stored in the second retention system comprising copying the at least part of the surveillance data into the second retention system and preserving an original version of the surveillance data in the first data retention system in accordance with the first retention policy

In at least one embodiment in accordance with any previous/other embodiment described herein, the program instructions are executable by the processing unit for causing the at least part of the surveillance data to be stored in the second retention system comprising transferring the at least part of the surveillance data from the first retention system to the second retention system.

In at least one embodiment in accordance with any previous/other embodiment described herein, the program instructions are executable by the processing unit for transferring the at least part of the surveillance data comprising copying the at least part of the surveillance data from the first retention system to the second retention system and causing the at least part of the surveillance data to be deleted from the first retention system.

Many further features and combinations thereof concerning embodiments described herein will appear to those skilled in the art following a reading of the instant disclosure.

### DESCRIPTION OF THE FIGURES

In the figures,
Fig. 1 is a schematic diagram illustrating an example system for data retention, in accordance with an illustrative embodiment;
Fig. 2 is a schematic diagram of the data retention engine of Fig. 1, in accordance with an illustrative embodiment;
Fig. 3 is a flowchart illustrating an example method for data retention, in accordance with an illustrative embodiment; and
Fig. 4 is block diagram of an example computing device, in accordance with an illustrative embodiment.

It will be noticed that throughout the appended drawings, like features are identified by like reference numerals.

### DETAILED DESCRIPTION

Described herein are methods and systems for data retention. The systems and methods described herein may be used for monitoring and surveillance, and more specifically for retention of media stream data generated within an area monitoring system (also referred to herein as a "surveillance system").

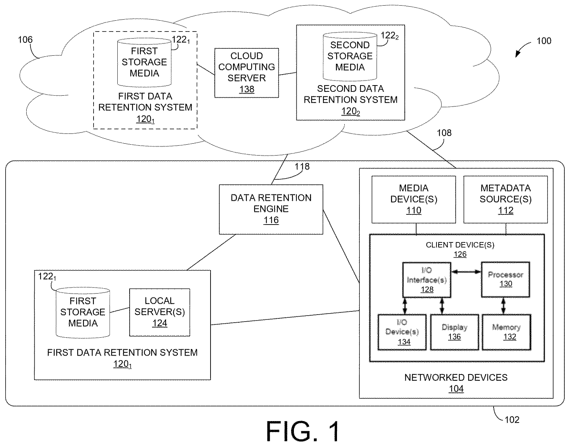

Fig. 1 illustrates an example system 100 for data retention, which is illustratively a surveillance system. It should however be understood that, while reference is made herein to the surveillance system 100 being used for security purposes (i.e., for reasons related to securing a given area), the system 100 may be used for monitoring any other suitable activity or application, including, but not limited to, operational monitoring of various types, for example for monitoring public transport or traffic, monitoring retail sales locations, monitoring industrial and/or manufacturing processes, supply chain monitoring, etc. The system 100 may also be implemented or deployed in any suitable environment, including, but not limited to, a home, a business, a vehicle (e.g., a train, bus, or other mobile environment), and the like.

The system 100 comprises at least one local network 102 deployed at a location (or site) being surveilled. Although only one local network 102 is illustrated and described herein, it should be understood that the system 100 may comprise any suitable number of local networks as in 102, each deployed at a given location. In some embodiments, only one network 102 is provided, as illustrated in Fig. 1. In other embodiments, the system 100 is a distributed system comprising more than one network as in 102. For instance, a first network may be deployed at a first geographical location and a second network may be deployed at a second geographical location different from the first geographical location, with the first and second geographical locations forming part of a distributed site being jointly monitored. Each network 102 may comprise any suitable network including, but not limited to, a Personal Area Network (PAN), Local Area Network (LAN), Wireless Local Area Network (WLAN), Metropolitan Area Network (MAN), or Wide Area Network (WAN), or combinations thereof. In one embodiment, each network as in 102 is a LAN having a plurality of networked devices 104 placed thereon. In addition, each network as in 102 is communicatively coupled to a cloud-based computing infrastructure 106 which is configured to provide one or more cloud computing services to one or more components of the system 100, as will be described further below.

It should be understood that the system 100 may comprise a wide variety of different network technologies and protocols. Communication between the networked devices 104 may occur across wired, wireless, or a combination of wired and wireless networks. In addition to the networked devices 104 described below, the system 100 may include any number of devices such as routers, modems, bridges, hubs, switches, and/or repeaters, among other possibilities.

Still referring to Fig. 1, in some embodiments, the plurality of networked devices 104 may have direct network connectivity (i.e., are configured to directly connect, through a communication link 108) to the cloud-based computing infrastructure 106. In other embodiments, the plurality of networked devices 104 may not be configured to have such direct network connectivity and may only access the cloud-based computing infrastructure 106 via one or more other networked devices 104 (e.g., via one or more gateway devices, not shown) to which they are connected.

In one embodiment, the plurality of networked devices 104 comprises a plurality of media devices 110, which may be fixed or stationary and deployed at the location being surveilled using the system 100. It should be understood that any suitable number of media devices may apply. When the system 100 comprises several media devices 110, these may be located in close proximity to one another, for instance in the same building or on the same city block, or they may be remote from one another, for instance, located in different parts of the same city or in different cities altogether. Embodiments involving clusters of media devices 110 may also be considered, where media devices 110 belonging to one of a number of clusters may be geographically proximate to one another while the clusters themselves may be remote from one another.

The media devices 110 may be used to monitor objects, events, places, and/or people of interest within the location under surveillance. As a result of such monitoring, the media devices 110 generate media streams (i.e. a sequence of data elements produced over time), which may include image and/or video data and/or audio data, all referred to herein as "media stream data". In some embodiments, the media stream data comprises one or more video streams (also referred to herein as "video feeds") which may each comprise a plurality of images, and each image of the video stream may be referred to as a "frame". The data elements forming a given media stream (e.g., a given video stream) may be produced in a continuous fashion, and, in some instances, in real-time or near real-time. The data elements (also referred to herein as "portions" of the media stream data) may be of various length, size, and/or time duration, depending on the implementation. In some cases, each portion of the media stream data may represent a single packet, a group of packets composing a single frame, a group of packets composing multiple frames, or the like. Thus, when used herein to refer to a portion of the media stream data, the term "portion" may encompass any suitable part or the entirety of a particular stream (e.g., video stream) forming the media stream data.

Any media stream data generated by the media devices 110 may further comprise one or more metadata items (also referred to herein as "metadata"), which might include, but is not limited to, an identifier associated with the media device 110 that generated the media stream, a timestamp, media content descriptors, auditing or integrity parameters, and the like. It should be understood that the media stream data generated by the media devices 110 may also comprise and/or have associated therewith text data indicative of various information including, but not limited to, transcripts, activity trails or records, entry/exit activity, badge sequences, measurements (e.g., temperature, pressure, or other measurements associated with relevant operating parameter(s) of the surveillance system 100), etc. Although the present disclosure primarily focuses on embodiments in which the media devices 110 produce digital media stream data, it should be understood that embodiments in which the devices produce analog data which is converted to digital data are also considered. Additionally, in some embodiments the metadata items may be provided in a separate metadata stream that is associated with the media data stream. The metadata stream and the media data stream may be transmitted jointly, or separately, as appropriate.

The media devices 110 may provide the media stream data in real-time (or near real-time) or in non real-time. The media devices 110 may indeed generate media stream data and automatically transmit the generated data to other components of the system 100 in real-time (or near real-time). The media devices 110 may also comprise local storage (e.g., a local memory, not shown) in which the media stream data is stored. The media stream data may be stored within the system 100 in any suitable format, depending on the type of media stream data. In some embodiments, the media stream data may be stored in standards-compliant formats. In other embodiments, the media stream data may be stored in proprietary or custom formats. In embodiments in which the media stream data is provided in non-real time, the media devices 110 may thus comprise devices, such as network-attached storage media having media stream data recorded therein. It should therefore be understood that while reference is made herein to the media devices 110 being video cameras, this is for illustrative purposes only and any other suitable media device may apply. The media devices 110 may additionally or alternatively comprise devices which playback or otherwise provide previously recorded media stream data. Examples of such devices include, but are not limited to, hard drives, solid state drives, network-attached storage devices, cloud or other network-based storage systems, media center computers, general purpose computers, and the like. It should be understood that the group of media devices 110 may comprise devices of different types.

In some embodiments, the media devices 110 comprise devices configured to capture and/or manipulate images, video, and provide video-related functionality. Examples include, but are not limited to, surveillance cameras, dome cameras, pan, tilt, and zoom (PTZ) cameras, panoramic and multi-sensor cameras, desktop video cameras (i.e. webcams), dashboard cameras (dashcams), body wearable or body-worn cameras (bodycams), vehicle-mounted cameras, drone cameras, mobile telephone cameras, still image cameras, digital camcorders, etc. The media devices 110 may also comprise Internet Protocol (IP) cameras configured to send the media stream data via the network 102 they are placed in, which may, in this case, comprise an IP network. It should however be understood that the media devices 110 may comprise any other suitable image acquisition device. For example, the media devices 110 may comprise tire imaging cameras configured to take images of tires, where the tire images may be used in connection with tire tracks associate with an event under investigation. The media devices 110 may also comprise infrared (IR) thermal imaging devices used for flare monitoring (i.e. visual monitoring of a flare's behavior and state) in industrial (e.g., oil and gas) processes where flare stacks are used to burn unwanted waste gas byproducts and the like. For example, the IR thermal imaging devices may be configured to acquire images (e.g., videos and/or photos) as proof that the flare is burning continuously, and to obtain temperature readings of a flare stack or pilot flame.

The media devices 110 may also (or alternatively) comprise any other suitable device configured to acquire operational data and/or data related to physical security at the location where the system 100 is deployed. Thus, in addition to comprising image acquisition devices (e.g., cameras), the media devices 110 may include, but are not limited to, radars, audio microphones, video and/or audio encoders connected to analog device(s) or appliance(s), sensors (e.g., motion sensors), door stations, intercoms, and the like. The media devices 110 may also comprise license plate recognition (LPR) devices (e.g., LPR cameras) configured to provide license plate reads by capturing images of a vehicle around the license plate area. The media devices 110 may also comprise access control devices (e.g., card readers or keypads) configured to catalog events (also referred to as "access control events") relating to access cards being read, access being granted or refused, and the changing status of a barrier (e.g., a door) or similar resource that controls access between locations and which has access control device(s) associated therewith.

As used herein, the term "media stream data" may therefore be used interchangeably with other terms, such as "surveillance data", "operational data", or the like, to refer to any data generated by the media devices 110 in the process of monitoring or surveilling a location for any suitable purpose, for instance to ensure the security of persons or objects within the location, to ensure compliance with regulations or best practices, for traceability when performing processes or operations, and the like. As such, references to particular types of media streams, including video streams, audio streams, and the like, may be replaced by references to streams of other types of data (e.g., streams of sensor data, streams of events data, etc.), as appropriate.

Still referring to Fig. 1, in one embodiment, the plurality of networked devices 104 further comprise one or more metadata sources 112 configured to provide information (i.e. metadata) about events occurring at the location being surveilled by the system 100. In some embodiments, the metadata provided by the metadata source(s) 112 is not to be retained (i.e. stored) by the system 100, unlike the media stream data generated by the media devices 110. The metadata source(s) 112 include, but are not limited to, access control systems, point of sales systems, sensors, and any other suitable device or system. In some embodiments, the metadata source(s) 112 comprise a video analytics system. Although the metadata source(s) 112 are illustrated as being separate from the media devices 110, it should be understood that the metadata source(s) 112 may, in some embodiment, be integral with the media devices 110. It should also be understood that other component(s) of the system 100 may also be configured to generate metadata information, as described further below.

Still referring to Fig. 1, the system 100 also comprises a data retention engine 116 communicatively coupled to the media devices 110 and the metadata source(s) 112. In the illustrated embodiment, the data retention engine 116 has direct connectivity to the cloud-based computing infrastructure 106 (e.g., via communication link 118). The data retention engine 116 may also have indirect connectivity to the cloud-based computing infrastructure 106 (e.g., via one or more networked devices 104). Although illustrated as separate from the networked devices 104, it should be understood that the data retention engine 116 may be part thereof. In addition, although the media devices 110 and the data retention engine 116 are illustrated as being provided on the same (i.e. common) local network 102, it may, in some embodiments, be suitable for the data retention engine 116 to be provided in the cloud-based computing infrastructure 106. It may also be suitable for the data retention engine 116 to be provided on a local network different from the local network 102 on which the media devices 110 are provided. The data retention engine 116 may be provided at a centralizing location, such as at a local network different from the local network 102 which manages a plurality of subnetworks.

The data retention engine 116 and the networked devices 104 are communicatively coupled to a first data retention system 120₁, which comprises first storage media 122₁ and one or more local servers 124 coupled to the first storage media 122₁. The one or more servers 124 are in communication with the networked devices 104 and receive media stream data from the media devices 110 and metadata items from the metadata source(s) 112. The one or more servers 124 are configured to process the received data, as required, and to store the data in the first storage media 122₁ for any suitable reasons including, but not limited to, for safekeeping as part of a legal requirement, for performing analysis thereon, for later playback, or the like. Although the first data retention system 120, is illustrated as being provided on the local network 102, it should be understood that, in some embodiments, the first data retention system 120₁ may be provided in the cloud-based computing infrastructure 106. In this case, the first storage media 122, would be cloud-based storage media and the one or more local servers 124 would be implemented as one or more cloud computing servers.

In one embodiment, the first data retention system 120, is a security management system configured to implement procedures for protecting assets (e.g., facilities, equipment, resources, and/or personnel) surveilled using the system 100 from, or providing resilience against, potential harm or damage. The security management system may be used for various purposes including, but not limited to, threat assessment, risk analysis and assessment, information classification, and loss prevention.

In another embodiment, the first data retention system 120, is a license plate recognition system (e.g., an automated license plate recognition (ALPR) system) configured to acquire digital images of vehicles, to search for a license plate in each digital image, and to process each digital image in order to identify the license plate number on the license plate.

In yet another embodiment, the first data retention system 120, is a video management system configured to collect video data captured by camera(s) (and/or other sources) deployed at the surveilled location and to store the video data to the first storage media 122₁ for subsequent use. In addition to collecting and recording video data, the video management system may also be configured to process the video data for various purposes. For example, the video management system may have video analytics capabilities (e.g., implemented by the server(s) 124) that allow analysis of the video data for various purposes, such as motion detection or the like. It should however be understood that the video analytics capabilities may alternatively or additionally be implemented in the metadata source(s) 112, as previously noted.

As used herein, the terms "video analytics," "video analysis", "video content analytics", "video content analysis", "content analytics", and "content analysis" refer to one or more computer-implemented processes for analyzing media stream data (e.g., a video feed) to derive useful information about the contents thereof. The derived information may indicate various temporal and/or spatial events in the media stream data (e.g., the video feed) and may be used for any suitable application including, but not limited to, people counting, object detection, object identification, facial recognition, and automatic plate number recognition. For example, as a result of processing the video feed, the video analytics system may detect one or more objects and/or motion of the one or more objects at the location being surveilled using the surveillance system.

Conducting an analysis of the content of the media stream data may therefore result in the generation of metadata that may comprise, but is not limited to, metadata items about the media stream itself (e.g., data format, resolution, time of capture, location of capture, media device used for capture, and the like) and metadata items about the contents of the media stream, including, but not limited to, metadata items relating the presence of object(s) in the media stream (e.g., object type, object color, object location in the field of view of the media device, object direction of movement, object speed of movement, and the like), metadata items relating to environmental factors visible in the media stream (e.g., weather type, lighting conditions, disaster elements, and the like), or other metadata items. Some metadata items may be used to derive other metadata items. For example, a succession of object location metadata items (i.e. successive locations of an object in the media device's field of view over a given period of time) may be used to determine the object's speed of movement.

The objects may, for example, include vehicles having given attribute(s) (e.g., type, color, make, model, etc.) and/or being vehicles of interest (e.g., license plate identifier matches a hitlist). The objects may also include persons performing specific action(s), exhibiting specific behavior(s), fitting a given description, and/or having given attribute(s) such as physical characteristic(s) (e.g., height, hair color, eye color, etc.), physical appearance (e.g., type of clothing, color of clothing, type of shoes, colors of shoes, glasses, tattoos, scars, carried objects, and any other identifying mark), or the like. The objects may also include registered persons of interest (e.g., registered criminals). Other embodiments may apply.

While reference is made herein to metadata being generated based on the analysis of the media stream data (e.g., performed by the server(s) 124 of the first data retention system 120, and/or by the metadata source(s) 112), it should be understood that the media devices 110 may (instead or additionally) be configured to directly provide metadata items. In other words, some or all of the metadata items may be known to the source (i.e. the media device(s) 110 that generate the media stream data) and produced thereat. Indeed, the metadata may be provided by each media device 110 along with (e.g., as part of) or separate from the media streams generated by the media device 110.

It should however be understood that, in some embodiments, the media devices 110 may only be configured to generate part of the metadata. In yet other embodiments, the media devices 110 may not be configured to generate any of the metadata. This may be the case, for example, when the media devices 110 have limited processing power or do not have the necessary tools (hardware and/or software) to produce analytics and generate metadata. In this case, the media devices 110 may then provide the media stream data they have generated, alongside any metadata they may be able to produce, to another device present on the local network 102 for the other device to analyze the media steam data to generate metadata relating to the content of the media stream data.

Still referring to Fig. 1, in one embodiment, the networked devices 104 further comprise client device(s) 126 in communication with the one or more media devices 110, the metadata source(s) 112, and the data retention engine 116. One or more client devices 126 may be provided, in close proximity to one another, for instance located in the same office or data center, or remote from one another, for instance located in different offices and data centers dispersed across the same city or in different cities altogether. Each client device 126 may be a remote computing device (i.e. functioning as a client) that comprises a plurality of components interconnected via bus connections and the like. In the illustrated example, each client device 126 comprises I/O interface(s) 128, at least one processor 130, at least one memory 132, I/O device(s) 134 (e.g., a keyboard, a mouse, a touchscreen, etc.), and at least one display device 136 (e.g. a screen, a tactile display, etc.). The client device 126 may be a desktop computer, a laptop, a smartphone, a tablet, etc.

A client application program may be stored in the memory 132 of each client device 126, the client application program providing the user with an interface to interact with the data retention engine 116. In some embodiments, the data retention engine 116 may be connected to at least one client device 126, where, for instance, the connection between the data retention engine 116 and the client device 126 may be a wired connection. In some embodiments, the functionality of the data retention engine 116 and the client device 212616 may be implemented on a single computing device.

The client device 126 may be operated by authorized user(s) to access, view, process, edit and/or analyze information associated with the media stream data generated by the media devices 110 and stored in the target storage media (e.g., in the first storage media 122₁ or in second storage media 122₂ described further below). The information may comprise video information, such as a video feed, as well as any other relevant information. The client device 126 may be configured to launch a video playback application, a web browser, or a web application (not shown) that renders a graphical user interface (GUI) on the display device 126. The GUI may be used to display outputs and accept inputs and/or commands from user(s) of the client device 126. The GUI may further provide user(s) with the ability to view and/or edit video feeds, as well as be presented information of interest related to the video feeds.

Still referring to Fig. 1, the cloud-based computing infrastructure 106 is configured to run part of the workload of components of the system 100 in the cloud. In particular, the cloud-based computing infrastructure 106 may provide any suitable cloud computing service(s) related to management of the system 100 including, but not limited to, processing of media stream data, cloud archiving or storage of media stream data, storage of video indexes, off-network live video requests and viewing, video analysis, indexing and persisting metadata for applications such as forensic search, live video camera health monitoring, alert scheduling, bandwidth management, or other form of processing and/or management related to the media stream data. For this purpose, in one embodiment, the cloud-based computing infrastructure 106 comprises a cloud computing device (referred to herein as a "cloud computing server") 138. The cloud computing server 138 may comprise one or more virtual processors configured to process the media stream data upon receipt thereof and cause the cloud computing service(s) to be provided.

A second data retention system 120₂, which comprises second storage media (i.e. cloud-based storage media) 122₂, is provided in the cloud-based computing infrastructure 106 and is communicatively coupled to the cloud computing server 138. Although the cloud computing server 138 is illustrated as being separate from the second data retention system 120₂, it should be understood that the cloud computing server 138 may be part of the second data retention system 120₂.

In one embodiment, the second data retention system 120₂ is an evidence management system configured for managing the storage and distribution of evidence data. As used herein, the term "evidence data" refers to data associated with crimes, incidents, and/or other events pertinent to law enforcement, security, operations, or the like. Examples of evidence data include, but are not limited to, data related to an investigation or a potential investigation, and data related to a violation or a potential violation of a law, rule or regulation.

The first storage media 122, and the second storage media 122₂ may each comprise a suitable device or medium (i.e. a computer-readable medium) configured for storing data in a format readable by a processor or other computing device. The first storage media 122, and the second storage media 122₂ may, in some embodiments, be one or more servers comprising one or more databases. For example, the first storage media 122₁ and the second storage media 122₂ may be implemented as distributed storage (e.g., as a collection of one or more distributed servers). As noted herein above, in one embodiment, the second storage media 122₂ is part of a cloud-based storage service, such as Microsoft^{®} Azure^{®}, Amazon^{®} AWS^{®}, or a similar cloud-based storage service offered by another provider. As also noted herein above, in one embodiment, the first storage media 122₁ is provided on the local network 102. In this case, the first storage media 122₁ comprises local storage while the second storage media 122₂ comprises cloud-based storage media. In another embodiment, the first storage media 122₁ is a cloud-based storage media that is part of a cloud-based storage service such that both the first storage media 122, and the second storage media 122₂ comprise cloud-based storage. In yet other embodiments, the first storage media 122, may be an abstraction of several layers of storage, which may include local storage, cloud storage, network storage, or any suitable combination thereof.

The first data retention system 120₁ and the second data retention system 120₂ respectively have associated therewith a first retention policy and a second retention policy. As used herein, the term "retention policy" refers to a set of rules indicative of the manner in which the media stream data is to be retained. The first retention policy therefore comprises rules for storing (or archiving) the media stream data in the first storage media 122₁, and the second retention policy comprises rules for storing the media stream data in the second storage media 122₂.

In some embodiment, the retention policies are stored in a memory associated with the first data retention system 120, and the second data retention system 120₂ and may be obtained by the data retention engine 116. The retention policies stored in storage media (e.g., first storage media 122₁) provided on the local network 102 may be retrieved directly by the data retention engine 116. The retention policies stored in storage media provided in the cloud-based computing infrastructure 106 may be retrieved by the data retention engine 116 via the cloud computing server 138. For this purpose, the data retention engine 116 may send a request to the cloud computing server 138, which may in turn retrieve the policies from the cloud-based storage media (e.g., second storage media 122₂) and transmit the retrieved policies to the requesting entity.

The retention policies are illustratively pre-determined (e.g., by an operator of the system 100) and may be set in order to achieve any desired objective in relation to the system 100. In one embodiment, the retention policies are set in order to optimize the costs of operating the system 100. In another embodiment, the retention policies are set in order to operate in compliance with local regulations or guidelines. In yet another embodiment, the retention policies are set in order to set boundaries on which users are granted access to the media through a secure platform. In a further embodiment, the retention policies are set in order to account for any one or more of the above factors. It should however be understood that the retention policies may also be set in order to optimize network usage, system reliability, and resiliency to disconnection. As used herein, the term "reliability", when referring to the system 100, refers to the fact that one can depend (or rely) on the system 100 to operate as expected. For a video-surveillance system, reliability may encompass several aspects including, but not limited to, ensuring that video is recorded and available at all times or ensuring proper management of the network bandwidth. As used herein, the term "resiliency to disconnection" refers to the fact that recording gaps in the media stream data are avoided even in the event of disconnection of the media devices 110 generating the media stream data. For example, when the first storage media 122, is located in the cloud-based computing infrastructure 106, if a media device 110 (e.g., a video camera) continuously streams data that is stored in the first storage media 122₁ and loses network (e.g., Internet) connectivity, recording gaps in the video archive can be avoided by relying on local storage provided at the local network 102. In particular, the local storage (e.g., memory within the media device 110) may act as a buffer that allows for the system 100 to fill any gaps in cloud storage when network connectivity is restored.

The retention policies may vary depending on the configuration of the system 100. In some embodiments, each retention policy is indicative of the location of the target storage media (i.e. the first storage media 122, associated with the first data retention system 120₁ or the second storage media 122₂ associated with the second data retention system 120₂) to be used. In some embodiments, the retention policies may indicate that the media stream data is to be stored in a redundant manner (using the same or different quality), i.e. in both the first storage media 122₁ and the second storage media 122₂.

In some embodiments, each retention policy may indicate the time period (also referred to herein as the "storage duration") for which the media stream data is to be stored or archived. The storage duration may be expressed in a number of hours, days, months, etc. and any suitable time period may apply. The storage duration may be stipulated by local ordinance or regulation. This may be the case, for instance, in certain jurisdictions where certain businesses are required to maintain at all times at least a predetermined number of days (e.g., 30, 90, or 180 days) of archived video records for all video cameras on their premises or face potential fines. The first data retention system 120, illustratively has associated therewith a first retention policy indicative of a first time period for which data is to be stored in the first storage media 122₁, and the second data retention system 120₂ has associated therewith a second retention policy indicative of a second time period for which data is to be stored in the second storage media 122₂. In one embodiment, the first retention policy is dictated by one or more legal requirements, causing the retention time associated with the first storage media 122₁ to be limited by the legislation applicable in the jurisdiction in which the system 100 is deployed. In contrast, the second retention policy may not be subject to the same legislation, or may be treated differently under the legislation, such that the second time period is greater than the first time period. In this manner, that media stream data may be stored in the first storage media 122₁ for a shorter time period than the time period for which the media stream data may be stored in the second storage media 122₂. The first storage media 122₁ may therefore be referred to as "short-term storage" whereas the second storage media 122₂ may be referred to as "long-term storage".

The media stream data may be intended for one or more recipients (e.g., investigators including, but not limited to, law enforcement agents, prosecutors or other legal personnel, members of security services, security contractors, private investigators, and crime analysts) having authorized interest in examining the contents thereof. Thus, in some embodiments, each retention policy may have associated therewith one or more data access conditions, permissions or limitations that govern which user(s) may access the media stream data (or portions thereof) retained in a given one of the first data retention system 120, and the second data retention system 120₂ (i.e., stored in a given one of the first storage media 122₁ and the second storage media 122₂). For example, the first and the second retention policy may have associated therewith a user access list indicative of the user(s) which are authorized to access the media stream data (or portions thereof). The first and the second retention policy may also impose a time restriction on access to the media stream data (or portions thereof). In addition (or alternatively) to indicating access rights, each retention policy may further indicate corporate guidelines and/or best practices associated with usage of the first data retention system 120, and the second data retention system 120₂. For example, the retention policy may be associated with particular audit trail production requirements which may prompt the user to enter various information when accessing the media stream data, for instance a reason for access, an investigation file name or number associated with the access, and the like. It should however be understood that, although reference is made herein to the first and second retention policies being indicative of access rights for the media stream data, the access rights may be dictated by the first data retention system 120, and the second data retention system 120₂ themselves, rather than by the retention policies.

For example, the first and second data retention systems 120₁, 120₂ may belong to different entities, different groups within a common entity, or the like. As a result, different users, associated with the different entities or groups, may be provided access to one (or both) of the first and second data retention systems 120₁, 120₂ as part of their regular duties or associations. A first example user belonging to a first entity, which operates the first data retention system 120₁, may have access to the first data retention system 120₁ using their credentials, which may have been provided by a suitable administrator of the first entity. However, because the second data retention system 120₂ is operated by a separate entity, or a separate group within the first entity, the credentials provided to the first example user may not provide access to the second data retention system 120₂. A second example user, belonging to the separate entity, or to the separate group within the first entity, may use their provided credentials to access the second data retention system 120₂, as appropriate. Of course, other examples are also considered: for instance, the first and second data retention systems 120₁, 120₂, may maintain lists of users who are authorized to access the first and second data retention systems 120₁, 120₂; the lists may be updated periodically or punctually to maintain a suitable level of information security for the first and second data retention systems 120₁, 120₂, and for the media stream data stored therein.

In some embodiments, the retention policies may also indicate one or more additional actions to be performed on the media stream data prior to storage thereof. For example, a retention policy may require for the media stream data to be thinned to retain only part(s) (e.g., important part(s)) thereof. Any suitable thinning mechanism may be used. Another example is for the retention policy to require that the media stream data be stored at a particular quality (e.g. to keep as high of a resolution as possible, to keep at least a quality above a threshold, etc.), and for the selected media stream data (i.e. the resulting high-quality or low-quality media stream data) to be stored in the second storage media 122₂. It should be understood that the retention policy may be indicative of any suitable processing (besides thinning and quality modification) to be performed on the media stream data prior to storage thereof. Such processing may include, but is not limited to, video transcoding the media stream data, decoding the media stream data, re-encoding the media stream data, applying at least one overlay on the media stream data, applying a privacy mask on the media stream data, digitally signing the media stream data, encrypting the media stream data, and adding metadata to the media stream data (e.g., to indicate a time at which the media stream data was generated).

The first and the second retention policy may be indicative of a data security protocol associated with the first data retention system 120, and the second data retention system 120₂. The data security protocol may indicate an encryption scheme (e.g., a key encryption scheme) to be used to encrypt the media stream data prior to retention of the media stream data in a given one of the first data retention system 120, and the second data retention system 120₂ (i.e., prior to storage of the media stream data in a given one of the first storage media 122₁ and the second storage media 122₂). In one embodiment, a first encryption scheme may be used in relation to the first data retention system 120₁ and a second encryption scheme may be used in relation to the second data retention system 120₂, with the second encryption scheme being different from the first encryption scheme. For example, prior to being stored in the second storage media 122₂, the media stream data may be encrypted with a public key associated an individual (e.g., a judge) or entity (e.g., a court) associated with legal proceedings (e.g. court proceedings) involving the media stream data. The media stream data may then only be decrypted upon issuance of a court order allowing an end-user access to the media stream data. In order to further secure the media stream data using multiple keys (e.g., a court key and an end-user key), cascaded encryption may also be applied to the media stream data. This may be achieved using a key derivation function (or any other suitable cryptographic algorithm) to derive multiple keys to be used to encrypt the media stream data multiple times. Other embodiments may apply. It should also be understood that, although reference is made herein to the data security protocol being dictated by the retention policies, the data security protocol may, in some embodiments, be dictated by the data retention system itself (i.e., by the first data retention system 120, and/or the second data retention system 120₂). For example, the second data retention system 120₂ may be configured to apply a particular type of data security protocol (e.g., encryption scheme) to all data stored therein irrespective of the second retention policy under which the data is being stored in the second data retention system 120₂.

It should be understood that the examples of retention policies provided herein are for the purpose of illustration and that other embodiments may apply, depending on the application.

The data retention approach proposed herein stems from the fact that various laws, rules, and regulations may impact the manner in which media stream data can be stored in a retention system. For example, due to privacy concerns, certain countries have retention rules that require video surveillance data to only be stored in memory for a given time period (e.g., three (3) days) and to be disposed of after the given time period has elapsed. In this case, the video surveillance data may not be stored for a longer time period (e.g., for thirty (30) days, one year, or indefinitely) without providing a business or legal justification for the longer storage duration. The limited storage duration may however lead to loss of data, particularly in cases where data is purged from memory without having been viewed by security personnel. For example, in accordance with some legislation, video footage of a break-in that occurred at a store on a Thursday evening before a long weekend would be deleted by the following Sunday evening, before the store staff or owners would have time to review the footage. However, a certain time after the media stream data is captured and stored, it may prove to be of interest for a number of reasons (e.g., useful for investigative efforts and admissible as evidence in court proceedings).

In order to prevent loss of data (e.g., prematurely discarding of data) and related issues, it may be desirable to ensure that the media stream data is retained in the system 100 for an extended period of time, which may not be authorized by the first retention policy associated with the first data retention system 120₁. It is therefore proposed herein to copy or transfer at least part (i.e. the totality or portion(s)) of the media stream data, which is deemed to be of interest, from the first data retention system 120₁ (i.e. from the first storage media 122₁) to the second data retention system 120₂ for storage in the second storage media 122₂ whose retention policy may authorize long-term data retention. In embodiments in which part or all of the media stream data is copied into the second data retention system 120₂, the original version of the media stream data may be preserved in the first data retention system 120, as long as permitted by the first retention policy, which governs the storage of the media stream data in the first data retention system 120₁. In embodiments in which the media stream data is instead transferred from the first data retention system 120, to the second data retention system 120₂, this may be effected by first copying the media stream data from the first data retention system 120₁ to the second data retention system 120₂, and then causing the media stream data to be deleted from the first data retention system 120₁, for instance in situations where local regulations restrict the storage of duplicate copies of potentially sensitive or privacy-related media. Other approaches are also considered.

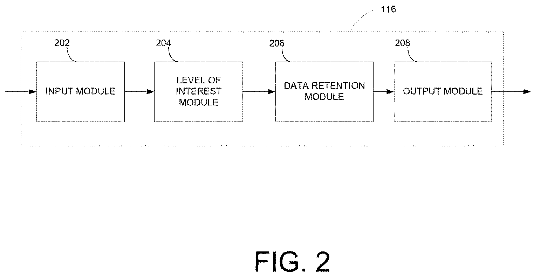

Referring to Fig. 2 in addition to Fig. 1, the data retention engine 116 is configured to control the manner in which the media stream data generated by the media devices 110 is retained (i.e. stored or archived) within the system 100 for subsequent access, use and/or processing. In the illustrated embodiment, the data retention engine 116 comprises an input module 202, a level of interest module 204, a data retention module 206, and an output module 208.

The input module 202 is configured to receive input data from various components of the system 100. As such, the input data received by the input module 202 comprises, but is not limited to, the media stream data generated by the media devices 110, metadata information from the metadata source(s) 112 (or any other suitable component of the surveillance system 100), data (e.g., commands, requests, or the like) received from a user via the client device(s) 126, and other relevant data obtained from one or more other components of the surveillance system 100.

In order to determine the manner in which data is to be retained in the system 100, the data retention engine 116 first obtains, at the input module 202, the media stream data that has been retained in the first data retention system 120, (i.e. stored in the first storage media 122₁) in accordance with the first retention policy). This may be achieved by querying the first storage media 122₁ to retrieve the media stream data therefrom. The data retention engine 116 may obtain the media stream data at predetermined (e.g., regular) time intervals during operation of the system 100, or in response to specific trigger event(s) (e.g., system event(s)) described further below.

In some embodiments, the data retention engine 116 may obtain the media stream data (and identify the level of interest in the media stream data) based on one or more inputs received from the second data retention system 120₂. The one or more inputs may be received in real-time or in non real-time and may indicate one or more rules according to which the media stream data is to be deemed of interest and, as such, to be obtained from the first data retention system 120, and stored in the second data retention system 120₂. The rule(s) may be specified by an authorized user of the system 100 (e.g., security personnel) and provided to the data retention engine 116 upon the user accessing the second data retention system 120₂. In response to receiving this information, the data retention engine 116 may be configured to evaluate the media stream data retained in the first data retention system 120, (e.g., by querying the first storage media 122₁) in order to determine whether the specified rules are satisfied. Upon identifying one or more portions of the media stream data for which the rules are satisfied, the data retention engine 116 may retrieve the one or more portions of the media stream data from the first storage media 122₁ and cause the media stream data portion(s) to be stored in the second data retention system 120₂ (e.g., in the second storage media 122₂). For example, a user may specify, using the second data retention system 120₂, a given location and a given timeframe related to a significant event or incident (e.g., a break and enter event, a door forced open event, fast movement, etc.) that occurred at the location monitored using the system 100. The data retention engine 116 may then obtain, from the first data retention system 120₁, the media stream data captured within the given timeframe at the given location (and/or within a vicinity thereof) and cause storage of the media stream data in the second data retention system 120₂. In some cases, rather than providing the rules to the data retention engine 116, the second data retention system 120₂ may be configured to directly query, using the rules, the media device(s) 110 for the media stream data matching the rules. In this manner, the second data retention system 120₂ may be configured to perform a reverse lookup procedure in which given media device(s) 110 that captured the matching media stream data (e.g., within the given timeframe and for the given location) can be identified. The matching media stream data may then be caused (by the data retention engine 116, the second data retention system 120₂, or the given media device(s) 110) to be transferred from the first data retention system 120, to the second data retention system 120₂ for storage therein.

The media stream data obtained from the first storage media 122₁ is then sent from the input module 202 to the level of interest module 204, which is configured to identify the level of interest in the media stream data. The level of interest module 204 is configured to determine whether at least part (i.e. relevant portion(s)) of the media stream data is deemed to be of interest (also referred to herein as "data of interest"). Any suitable portion of the media stream data may be considered to be data of interest. For example, in some embodiments, the relevant portion(s) of the media stream data comprise portion(s) of the media stream data that depict one or more events of interest occurring at the location being surveilled. The relevant portion(s) of the media stream data may also comprise portion(s) of the media stream data which are captured at a predetermined timeframe before and/or at a predetermined timeframe after the occurrence of the one or more events of interest. Any suitable timeframe (e.g., a few seconds, minutes, hours, etc.) may apply. As discussed further below, the level of interest may be determined actively by the data retention engine 116. Alternatively, the data retention engine 116 may determine the level of interest passively. This may be the case when a component of the system 10 other than the data retention engine 116 is configured to determine the level of interest and the data retention engine 116 is configured to obtain the previously-determined level of interest (e.g., by retrieving from memory or being provided the level of interest, for instance by a component of the system 100 having determined the level of interest).lf the level of interest module 204 identifies that at least part of the media stream data that was previously retained in the first data retention system 120, is of interest, the data retention module 206 determines that the data of interest should be retained in the second data retention system 120₂ rather than in, or additionally to, the first data retention system 120₁. The data retention module 206 thus causes the data of interest to be copied to or transferred from the first storage media 122, to the second storage media 122₂.

In some embodiments, the level of interest may be identified in non real-time, by evaluating the media stream data after it has been retained in the first data retention system 120, (e.g., upon retrieving the media stream data from the first storage media 122₁), as described above. It should however be understood that, in other embodiments, the level of interest may be identified in real-time. For example, the media stream data may be evaluated as it is captured and, every time the occurrence of a given event (e.g., a door forced open event) is detected, the media stream data is deemed to be of interest and at least part of the media stream data (i.e. relevant portion(s) thereof) is caused to be retained in the second data retention system 120₂ in real-time (i.e. caused to be instantaneously uploaded in the second storage media 122₂). The relevant portion(s) may comprise a screenshot or a single frame of video captured at the time the given event is detected, or frames captured within a predetermined timeframe encompassing the time at which the given event occurred. This may alleviate the need for retaining the media stream data in the first data retention system 120₁ beforehand.

The data retention module 206 sends one or more output signals to the output module 208 to cause the data of interest to be stored in the second data retention system 120₂. The output signals may comprise instructions specifying that the data of interest is to be stored in the second storage media 122₂ in accordance with the second retention policy, as well as specifying the storage duration and any other relevant storage instructions and/or information or data. In some embodiments, the output signals may comprise instructions to cause the data of interest to be copied from the first data retention system 120, to the second data retention system 120₂, and to be deleted from the first data retention system 120₁. In other embodiments, for redundancy purposes, the data retention module 206 may also send output signal(s) to the output module 208 to cause the data of interest to be copied into the second data retention system 120₂, and an original version of the data of interest to be preserved in the first data retention system 120, (according to the first retention policy).

In one embodiment, the data retention module 206 may cause the data of interest to be transferred to the second storage media 122₂ for storage therein along with the metadata item(s) associated with the media stream data. The metadata item(s) may indeed provide an indication of the event(s) having triggered the transfer of the data of interest from the first storage media 122, to the second storage media 122₂. For example, if the media stream data is deemed of interest as a result of detecting the trigger of a given alarm, the metadata item(s) may comprise the name of an alarm, the alarm instance identifier, the description of the alarm event, information about a sensor having triggered the alarm, and a timestamp associated with the alarm. Storing the metadata item(s) in association with the data of interest may then provide a rationale or evidence for transferring the data of interest from the first data retention system 120, to the second data retention system 120₂, which can in turn be used for auditability purposes.

As used herein, the term "level of interest" may relate to the degree to which the media stream data is of interest (e.g., deemed pertinent for an investigation or search that may be in progress or for any other suitable purpose), or suspected to be of interest (e.g., by the media device 110 capturing the media stream data, by a further downstream device, etc.), to user(s) of the system 100 (e.g., security personnel). The level of interest may, in some embodiments, be quantitative and expressed in numerical terms, as a value from a range of values (e.g., a value on a scale from 0 to 10, a value on a percentage scale, etc.). The level of interest may, in other embodiments, be qualitative and expressed using a qualitative measure such as "low", "moderate", or "high". For example, a level of interest greater than or equal to a predetermined threshold may be referred to as "high", whereas a level of interest lower than the threshold may be referred to as "low". Other embodiments may apply.

It should be understood that the media stream data may be delimited in any suitable manner. For example, a given media stream may comprise multiple media stream data, and any given media stream data may comprise multiple media stream segments. For example, the media stream data may comprise several video segments when video is continuously streamed by the media devices 110. In embodiments where the media stream data comprises a plurality of media stream segments each acquired over a given timeframe, a level of interest may be assigned to each media stream segment. In other words, the level of interest may be applicable for the given timeframe (i.e. to specific datapoints in a temporal fashion). For example, a media stream segment acquired over one timeframe may be assigned a low level of interest while a media stream segment acquired over another timeframe may be assigned a high level of interest.

The level of interest may be determined by evaluating one or more conditions which may be related to the media stream data itself and/or the content thereof. The various conditions may be evaluated, separately or in combination, and the determination as to whether the media stream data is of interest may be performed by any suitable component of the system 100 (e.g., the level of interest module 204 of the data retention engine 116, the media devices 110, and/or the client device(s) 126) or by at least one third-party external to the system 100 (e.g., a data supplier, a surveillance company other than the one associated with the surveillance system 100, a separate system providing data about machines breaking down, operator changing shifts, and the like, etc.). In other words, different devices (within the system 100 or separate therefrom) may be responsible for determining whether a particular media stream data is of interest or not. In some instances where determination of the level of interest is performed within the system 100, a given media device 110 may be responsible for this determination while, in other instances, a client device 126, or another device present on the local network 102 or part of the cloud-based computing infrastructure 106 may be responsible for this determination.

In some embodiments, a first component of the system 100 may make a first level (or preliminary) determination (e.g., based on a first set of conditions) as to whether the particular media stream data is of interest or not and may send the particular media stream data, along with the first level determination, to a second component of the system 100 which may evaluate additional conditions to complete the determination (i.e. may a second level or final determination). For example, the media stream data may be considered to be of interest if the media stream data corresponds to video captured at night and indicative of motion of more than a given number of objects, for a time period exceeding a given amount of time. The first system component may then be a media device 110 that evaluates whether the particular media stream data is indicative of motion of one or more objects present within the media device's field of view, or whether the particular media stream data was captured at a time of day of interest (e.g., in the evenings or during business hours). The second system component may be a given metadata source 112, which further evaluates, from the particular media stream data (e.g., by performing video content analysis), whether the detected motion indicates that the one or more objects are of interest, or whether the number of objects present within the media device's field of view exceeds a given threshold. In some embodiments, the determination as to whether the media stream data is of interest may be optimized by, using the first level determination, to identify certain media stream data as not being of interest based on one condition (amongst the multiple conditions to be evaluated) not being met. For instance, the first system component may determine that the particular media stream data is not indicative of any motion, causing the particular media stream data to be flagged as not being of interest.

The component of the system 100 which is responsible for determining whether the particular media stream data is of interest may process (e.g., conduct a video analysis or any other suitable analysis) the media streams (e.g., the media stream data) generated by each media device 110. The level of interest associated with the media stream data may then be determined based on an outcome of the processing (e.g., video analysis). As previously noted, processing (e.g., conducting an analysis) of the media stream data may result in generation of metadata that is stored in association with the media stream data. As also previously noted, each media device 110 may (instead or additionally) be configured to directly provide (along with or separate from the media stream data) the metadata to the component of the system 100 that is configured to determine whether the media stream data is of interest. The system component may then be configured to obtain the metadata (e.g., extract the metadata from the media streams) and determine based thereon whether the media stream data is of interest. In other cases, each of the media devices 110 may be configured to provide an indication that the generated media stream data is of interest. Such an indication may, for instance, be provided (e.g., contained) in the media streams generated by the media devices 110. As a result, the need for performing a video analysis of the media stream data may be alleviated. In yet other embodiment, the media devices 110 may provide the media stream data they have generated, alongside any metadata they may be able to produce, to another device present on the local network 102 (e.g., another media device 110, a metadata source 112, or a client device 126). The other device may then analyze (e.g., perform video analysis of) the media steam data to generate metadata relating to the content of the media stream data.

Any suitable component of the system 100 (e.g., the data retention engine 116, the media devices 110, and/or the client device(s) 126) may then use the metadata to determine whether the media stream data is of interest. It should be understood that the evaluation of the metadata and the evaluation of the level of interest in the media stream data may both be performed at the same time (i.e. concurrently) and/or by a same component of the system 100, which may result in an optimization.

In one embodiment, the media stream data may be considered to be of interest based on the metadata satisfying a time restriction. In particular, the media stream data may be considered to be of interest if it is determined (e.g., based on the time of capture metadata item, or timestamp) that the media stream data was generated during a target timeframe (i.e. a time period of interest), such as during business hours, during off-peak periods (e.g., on the weekends), in the evenings, or the like. For example, the level of interest may be higher for media stream data generated during business hours than for media stream data generated on the weekends.

In another embodiment, the media stream data may be considered to be of interest based on the metadata satisfying a location restriction. The location may be determined by way of a global positioning system (GPS) or similar technology, by recognition of certain landmarks or the like visible in the media stream data, or by proxy. For example, a camera name, IP address, or other information may indicate that the media device 110 is looking at a door, an entrance, or the like, and may be used as the location, region, or zone associated with the media data stream. For instance, the media stream data may be considered to be of interest if it is determined (e.g., based on the location of capture metadata item) that the media device 110 that generated the media stream data is positioned at a specific location (or geographic position) deemed to be of interest to the user(s) of the surveillance system 100. This may be the case when the media device 110 is a mobile camera (e.g., a body-wom camera) that uses a positioning system or device (e.g., a Global Position System - GPS - sensor incorporated therewith) to determine that the camera is at a particular location which makes the video captured by the camera of interest. In another example, the media stream data may be considered to be of interest depending on the regions or zones depicted by the media stream data (e.g., if it is determined, based on the metadata, that the media stream data depicts a doorway or other zone or region deemed to be of interest to the user(s)). Some locations (e.g., regions or zones) may also be geofenced (i.e. assigned a virtual perimeter or boundary) and the media stream data may be deemed of interest if it is determined that the media stream data depicts a person and/or object entering a geofenced zone or region. In yet another example, locations being surveilled may have different uses and usage levels, with some locations or areas being used more frequently than others for instance, and media stream data associated with locations or areas that are used more may have a higher level of interest than locations or areas that are used less.

The level of interest in the media stream data may also be based on the origin of the media stream data. As used herein, the term "origin" refers to the source of the media stream data, namely the identity, the IP address, and/or the geographic position (e.g., Global Positioning System, or GPS, coordinates) of a given media device 110 used to generate the media stream data. For example, the level of interest may be determined based on the identity of the given media device and/or with its geographic position. In some embodiments, certain origin markers, such as an IP address, may serve as a proxy for other origin markers: for instance, a default configuration for a surveillance system may indicate that a media device with an IP address ending in .001 is associated with a view of an entrance of the location, an IP address ending in .002 is associated with an exit of the location, and the like.

In another embodiment, the media stream data may be considered to be of interest based on analytics related to the media stream data, such as an analysis of the content present in the field of view of the media devices 110. For example, the media stream data may be considered to be of interest upon identifying one or more objects in the devices' field of view. The detection of any suitable object may result in media stream data being deemed of interest. For example, a video may be deemed of interest upon detection of an unattended package. In another example, the video may be deemed of interest upon detection that a delivery truck is parked at a loading dock on an evening on the weekend (while delivery trucks should only be making deliveries during business hours on weekdays). In yet another example, the media stream data may be deemed of interest upon detection of objects such as vehicles having given attribute(s) (e.g., type, color, make, model, etc.) and/or vehicles of interest (e.g., license plate identifier matches a hitlist). The objects may also include persons performing specific action(s), exhibiting specific behavior(s), fitting a given description, and/or having given attribute(s) such as physical characteristic(s) (e.g., height, hair color, eye color, etc.), physical appearance (e.g., type of clothing, color of clothing, type of shoes, colors of shoes, glasses, tattoos, scars, carried objects, and any other identifying mark), or the like. For example, when the media stream data comprises audio (e.g., captured by a microphone), processing the media stream data to perform the media content analysis may indicate that a person is screaming, causing the media stream data to be deemed of interest. The objects may also include registered persons of interest (e.g., registered criminals).

Any suitable technique may be used to identify the one or more objects present in the device's field of view. The identified object(s) may also be classified (e.g., into different categories such as person, vehicle, building, and the like) using any suitable technique. Such classification may either be performed by a given media device 110, such that the media device 110 sends the media stream data along with object classification metadata associated therewith. Alternatively, the media stream data may be received from the media device 110 without any object classification metadata and the object classification analysis may then be performed by a device (e.g., the data retention engine 116, a metadata source 112 or a client device 126) other than the media device 110 having generated the media stream data. For example, an object detection algorithm may be used to produce metadata relating to the presence and action of objects detected in part or all of the media stream data (the metadata may be structured according to a particular metadata standard, for instance ONVIF^{®} Profile M). Such an object detection algorithm may be provided in the component of the system 100 (e.g., the metadata source(s) 112, the data retention engine 116, and/or the client device(s) 126) configured to generate metadata which may then be used to determine whether the media stream data is of interest. As such, any one of the components of the system 100 may be provided with suitable computational resources and software capabilities for implementing the object detection algorithm.

The media stream data may further be considered to be of interest upon detection of a given number of objects in the devices' field of view. The number of objects may be determined using any suitable counting (e.g., people counting) or estimation technique. The media stream data may be considered to be of interest if the number of objects present in the devices' field of view is beyond (e.g., exceeds) a predetermined threshold. This may be applicable, for instance, when the allowable number of objects is limited by regulations, governmental or otherwise. For example, the media stream data may be considered to be of interest upon detection that a number of individuals (e.g., attendees at an event) present at a given location (e.g., a room or venue) at a given point in time exceeds the location's occupant capacity (e.g., the location's legal or expected maximum occupancy).

In addition, the media stream data may be considered to be of interest if movement has been detected in the devices' field of view (i.e. upon detection of moving objects). The media stream data may also be considered to be of interest based on a path or direction of travel of the objects present in the devices' field of view. For example, the media stream data may be considered to be of interest if the metadata is indicative that a vehicle is entering a parking lot at a given time, that an individual is entering a store through the exit rather than through the entrance, or that an individual is walking on a highway or other non-pedestrian road. The media stream data may also be considered to be of interest based on a speed, acceleration, and/or direction of movement of the objects detected in the devices' field of view (e.g., based on the speed being beyond a speed threshold, direction of movement breeching a predefined perimeter or boundary, etc.). For this purpose, once moving objects are detected in the devices' field of view, the speed of the detected objects may be determined. For example, the media stream data may be considered to be of interest upon detection of cars traveling above or below authorized speed limitations for a given location. It should be understood that the media stream data may also be considered to be of interest based on any suitable parameter related to the media stream data (e.g., a sound level) exceeding a predetermined threshold.

As previously noted, the various conditions described herein may be evaluated in combination in order to identify the level of interest associated with the media stream data. For example, the media stream data may be considered to be of interest if the media stream data depicts a person walking inside a store after closing, which corresponds to the combination of a time restriction with the detection of object(s) in the device's field of view. In another example, the media stream data may be considered to be of interest if the media stream data depicts more than six (6) people grouped together in a parking lot and a noise level exceeding 50 dB, which corresponds to the combination of the detection of object(s) in the device's field of view, the evaluation of the number of detected object(s), and the evaluation of the sound level.

Furthermore, the media stream data may be considered to be of interest upon detection (e.g., based on the metadata and/or analysis of the media stream data) of tampering with the media devices 110 or upon detection of other hardware failure related to the system 100. For example, the media stream data may be considered to be of interest if the metadata and/or the media stream data is indicative of physical vandalism, damage, or theft one or more of the media devices 110. For example, the media stream data may indicate that the field of view of one or more of the media devices 110 has been moved or blocked, or that the image or video generated by the one or more media devices 110 has been altered. The metadata and/or media stream data may also be indicative of device downtime or outage, i.e. that the media devices 110 are or have been offline (e.g., disconnected from the local network 102 and/or the cloud-based computing infrastructure 106) for a given period of time. In some cases, the field of view of a media device 110 may be determined by comparing an expected background of the image with a current background or image: when a current background or image departs from an expected background by a certain amount, for instance for a duration of time exceeding a particular threshold, or the like, this may indicate an attempt to block the field of view of view of the media device 110. Other approaches are also considered.

In some embodiments, the media stream data may be considered to be of interest upon detection (e.g., based on the metadata and/or analysis of the media stream data) of a requirement to share the media stream data with a third party external to the system 100, for audit and/or compliance purposes.

In another embodiment, the media stream data may be considered to be of interest based on one or more trigger events. For example, it may be determined (e.g., based on the metadata item(s) associated with the media stream data) that the media stream data was generated by the media devices 110 in response to occurrence of a trigger event.

Alternatively or additionally, the status of the system 100 (e.g., one or more indicators received therefrom) may indicate occurrence of the trigger event. The trigger event may or may not be an isolated event. The trigger event may include, but is not limited to, a system-initiated command (e.g., instructions for the media devices 110 to generate the media stream data), an alert or alarm (e.g., indicative of a threat level) triggered by a component of the system 100 (e.g., by client device(s) 126) or a third-party system (e.g., a system configured to manage the system 100), a trigger event associated with one or more of the media devices 110, or the like. For example, a motion sensor disposed within an establishment may be armed upon closing of the establishment. When the motion sensor is later tripped by the presence of an unauthorized person within the establishment, this may raise an alarm within the broader security system at the establishment, which includes the system 100. In another example, when a person not authorized to access a restricted area attempts to badge-in at a door to access the restricted area, this may raise an alarm (resulting from detection of an access denied event) and may cause the generation of media data comprising video footage of the security camera facing the door. Other examples include, but are not limited to, the triggering of an alarm in response to a glass/break event (e.g., a broken window), a fire, actuation of a panic button, a gunshot notification from a gunshot detector, etc. In response to the alarm being raised, all (or part of the) video captured by media devices 110 may be treated as video of interest.

It should be understood that the examples provided herein are for the purpose of illustration and that other embodiments may apply, depending on the application. For example, in some embodiments, the determination of certain media stream data as being of interest is based on deviation of the content of the media stream data from expected content or from relevant past content. For instance, when media stream metadata indicates motion within the field of view of the media device 110 capturing the media stream data at certain times of the day, at certain locations, or the like, this may be unexpected and thus be indicative of the media stream data being of interest. In another instance, when media stream metadata indicates a number of persons within the field of view of the media device 110 capturing the media stream data far exceeding an average number of people captured in previous media streams from the same media device 110 (e.g., more than a predetermined number of standard deviations beyond the average), this may be a deviation from the past video and thus be indicative of the media stream data being of interest.

It should also be understood that, in some embodiments, media stream data may be considered to be of interest retroactively, based on any of the indicators or conditions described herein. In such a case, part or all of media stream data which was not previously considered to be of interest is, at a later time, considered to be of interest based on the occurrence of any of the indicators or conditions. Indicating that the media stream data is now of interest can involve setting a metadata flag or similar variable associated with the media stream data to an appropriate value indicating that the media stream data is of interest. This may occur at any location within the system 100 at which the media stream data is stored, whether temporarily or permanently. By way of an example, first media stream data may capture imagery of a storefront, and second media stream data may capture imagery of a parking lot adjacent to the storefront. When an altercation occurs in the parking lot, the second media stream data is deemed of interest based on any number of existing parameters (e.g., the presence or number of vehicles after closing hours, the speed of movement of the vehicles, the actions of persons, etc.). Although the scene depicted in the first media stream data may not itself be of interest - for instance, the number of vehicles or persons, their speed or actions, etc., may not result in the video being initially deemed of interest - the second media stream data being deemed of interest may cause the first media stream data to retroactively be deemed of interest. In this example, the first media stream data may be deemed of interest to facilitate determining the comings and goings of individuals and/or vehicles involved in the altercation depicted in the second media stream data. The level of interest in the first media stream data may therefore be dependent or conditional on the level of interest in the second media stream data. The preceding example should be considered to be one illustrative example, and not limiting of the ways by which a particular media stream data is retroactively determined to be of interest.

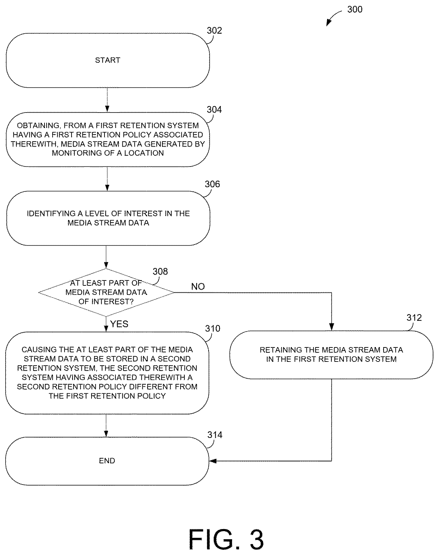

Referring now to Fig. 3, a method 300 for data retention in a surveillance system, such as the system 100 of Fig. 1, will now be described in accordance with one embodiment.

The method 300 may be performed by the data retention engine 116 illustrated in Figs. 1 and 2. The method 300 comprises, following start at step 302, obtaining from a first retention system having a first retention policy associated therewith, media stream data (e.g., surveillance data) generated by monitoring of a location (e.g., where a surveillance system is deployed) (step 304). In one embodiment, the media stream data is generated by one or more media devices (e.g., the media devices 110 of Fig. 1) deployed at the monitored location. The media stream data may also comprise one or more metadata items generated by one or more metadata sources (e.g., the metadata source(s) 112 of Fig. 1). The method 300 further comprises a step 306 of identifying a level of interest in the media stream data obtained at step 304. In some embodiments, step 306 may be performed by the data retention engine 116, in the manner described herein above with reference to Fig. 1 and Fig. 2. In other embodiments, the level of interest may be determined by another component of the system 100 or by a third-party external to the system 100 and provided to the data retention engine 116.

At step 308, an assessment is made as to whether at least part of the media stream data is of interest. Upon determining that at least part of the media stream data is of interest, the next step 310 is causing the at least part of the media stream data to be stored in a second retention system. The second retention system has associated therewith a second retention policy that is different from the first retention policy. For example, a longer storage duration may be associated with the second retention system. In some embodiments, causing the at least part of the surveillance data to be stored in the second retention system (step 310) comprises copying the at least part of the surveillance data into the second retention system and preserving an original version of the surveillance data in the first data retention system, in accordance with the first retention policy. In other embodiments, causing the at least part of the surveillance data to be stored in the second retention system comprises transferring the at least part of the surveillance data from the first retention system to the second retention system by copying the at least part of the surveillance data from the first retention system to the second retention system and causing the at least part of the surveillance data to be deleted from the first retention system. If it is determined at step 308 that the media stream data is not of interest, the media stream data is retained in the first retention system at step 312. The method 300 may then end at step 314.

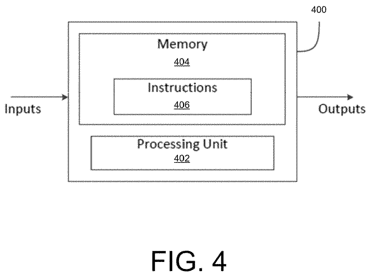

Fig. 4 is a schematic diagram of computing device 400, which may be used to implement one or more components of the system 100 of Fig. 1 and Fig. 2, such as the data retention engine 116, and/or to implement the method 300 of Fig. 3. In certain embodiments, the computing device 400 is operable to register and authenticate users (using a login, unique identifier, and password for example) prior to providing access to applications, a local network, network resources, other networks, and network security devices. The computing device 400 may serve one user or multiple users.

The computing device 400 comprises a processing unit 402 and a memory 404 which has stored therein computer-executable instructions 406. The processing unit 402 may comprise any suitable devices configured to implement the functionality of the method 400 such that instructions 406, when executed by the computing device 400 or other programmable apparatus, may cause the functions/acts/steps performed by method 300 as described herein to be executed. The processing unit 402 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitable programmed or programmable logic circuits, custom-designed analog and/or digital circuits, or any combination thereof. While in the example of Fig. 4, the processing unit 402 is shown as being unitary, the processing unit 402 may also be multicore, or distributed (e.g., a multi-processor).

The memory 404 may comprise any suitable known or other machine-readable storage medium. The memory 404 may comprise non-transitory computer readable storage medium, for example, but not limited to, an electronic, magnetic, optical, electromagnetic, infrared, or semiconductor system, apparatus, or device, or any suitable combination of the foregoing. The memory 404 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 404 may comprise any storage means (e.g. devices) suitable for retrievably storing machine-readable instructions 406 executable by the processing unit 402.

The memory 404, though shown as unitary for simplicity in the example of Fig. 4, may comprise multiple memory modules and/or caching. In particular, the memory 404 may comprise several layers of memory such as a hard drive, external drive (e.g. SD card storage) or the like and a faster and smaller RAM module. The RAM module may store data and/or program code currently being, recently being or soon to be processed by the processing unit 402 as well as cache data and/or program code from a hard drive. A hard drive may store program code and be accessed to retrieve such code for execution by the processing device 402 and may be accessed by the processing device 402 to store and access data. The memory 404 may have a recycling architecture for storing, for instance, data source and/or database coordinates, where older data files are deleted when the memory 404 is full or near being full, or after the older data files have been stored in memory 404 for a certain time.

The memory 404 stores program instructions and data used by the processing unit 402 to implement the data retention functions described herein. The memory 404 may also store locally media stream data, acting as a local database, as well as store information regarding the media devices 110. For example, the memory 404 may store the identity, IP address, and configuration (e.g., type, transmission capability, reception capability, etc.) of the media devices 110.

In some embodiments, the systems and methods for data retention in a surveillance system described herein may ensure that the media stream data generated by media devices (forming part of the surveillance system) is retained in a data retention system having a suitable data retention policy, when appropriate. The methods and systems described herein may therefore assist system operators in better managing costs, storage requirements, and infrastructure limitations. In some cases, employing the methods and systems described herein may further result in reduced data loss and/or improved data availability at any given time. The systems and methods described herein may additionally facilitate respecting regulations or ordinances about retention, specifically in jurisdictions where storage of surveillance data beyond a predetermined limit without justification or motive is prohibited or restricted. For example, a given jurisdiction may set a comparatively shorter maximum retention period for general video surveillance data, but permit a comparatively longer retention period for video surveillance data associated with an ongoing investigation, business compliance, or judicial proceeding. Thus, by identifying portions of the video surveillance data that may be of interest to an investigation and causing that video surveillance data to be transferred or copied to a separate retention system used for investigations-having an appropriate retention policy-the video surveillance data can be maintained to assist in the investigation or judicial proceeding whilst respecting the local regulations. In some embodiments, the systems and methods described herein may also facilitate the sharing of data through the use of a first retention system and a second retention system having different retention policies (and other stipulations). Indeed, the second retention system may be configured (based on its retention policy) to make it easier to share data than the first retention system, such that transferring data from the first retention system to the second retention system may facilitate subsequent sharing of the data. The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references have been made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The foregoing discussion provides many example embodiments. Although each embodiment represents a single combination of inventive elements, other examples may include all possible combinations of the disclosed elements. Thus if one embodiment comprises elements A, B, and C, and a second embodiment comprises elements B and D, other remaining combinations of A, B, C, or D, may also be used.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Although the embodiments have been described in detail, it should be understood that various changes, substitutions and alterations can be made herein without departing from the scope as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the examples described above and illustrated herein are intended to be examples only, and the appended claims are intended to include within their scope such processes, machines, manufacture, compositions of matter, means, methods, or steps.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method for data retention, the method comprising:
obtaining, from a first retention system having a first retention policy associated therewith, surveillance data generated by surveillance of a location where a surveillance system is deployed;
identifying a level of interest in the surveillance data; and
in response to identifying, based on the level of interest, that at least part of the surveillance data is of interest, causing the at least part of the surveillance data to be stored in a second retention system, the second retention system having associated therewith a second retention policy different from the first retention policy.

2. The method of claim 1, wherein each of the first retention policy and the second retention policy is indicative of a time period for which the surveillance data is to be stored in a respective one of the first retention system and the second retention system, preferably wherein the first retention policy is indicative of a first time period for which the surveillance data is to be stored in the first retention system, and the second retention policy is indicative of a second time period for which the surveillance data is to be stored in the second retention system, the second time period greater than the first time period.

3. The method of claim 1 or 2, wherein each of the first retention policy and the second retention policy is indicative of a location of target storage media associated with a respective one of the first retention system and the second retention system.

4. The method of any one of claims 1 to 3, wherein each of the first retention policy and the second retention policy is indicative of at least one of access rights, corporate guidelines, and best practices associated with a respective one of the first retention system and the second retention system.

5. The method of any one of claims 1 to 4, wherein the first retention system has associated therewith a first data security protocol and the second retention system has associated therewith a second data security protocol, the second data security protocol different from the first data security protocol and indicative of an encryption scheme to be used to encrypt the at least part of the surveillance data prior to storage thereof in the second retention system.

6. The method of any one of claims 1 to 5, wherein the first retention policy is dictated by at least one legal requirement.

7. The method of any one of claims 1 to 6, wherein the first retention system is a security management system and the second retention system is an evidence management system, preferably wherein the security management system is a video management system.

8. The method of any one of claims 1 to 7, wherein the first retention system has at least one of cloud-based storage media and local storage media associated therewith, and the second retention system has cloud-based storage media associated therewith.

9. The method of any one of claims 1 to 8, wherein the level of interest is identified based on one or more metadata items associated with the surveillance data, preferably wherein the at least part of the surveillance data is caused to be stored in the second retention system in association with the one or more metadata items.

10. The method of any one of claims 1 to 9, wherein the level of interest is identified based on one or more of a security system event from the surveillance system, a requirement to share the surveillance data with a third party external to the surveillance system, an identification of a given electronic device having generated the surveillance data, a geographic position of the given device, video analytics related to the surveillance data, and/or a timestamp.

11. The method of any one of claims 1 to 10, wherein identifying the level of interest comprises conducting a content analysis of the surveillance data, preferably wherein the at least part of the surveillance data is identified to be of interest as a result of detecting, based on the content analysis, a presence of at least one individual and/or object at the monitored location.

12. The method of any one of claims 1 to 11, wherein the surveillance data is obtained from the first retention system and/or the level of interest is identified in response to occurrence, at the monitored location, of a system-initiated event.

13. The method of any one of claims 1 to 12, wherein the surveillance data comprises at least one of audio data, image data, video data, and text data.

14. The method of any one of claims 1 to 13, wherein causing the at least part of the surveillance data to be stored in the second retention system comprises one of:
copying the at least part of the surveillance data into the second retention system and preserving an original version of the surveillance data in the first data retention system in accordance with the first retention policy; and
transferring the at least part of the surveillance data from the first retention system to the second retention system, preferably wherein transferring the at least part of the surveillance data comprises copying the at least part of the surveillance data from the first retention system to the second retention system and causing the at least part of the surveillance data to be deleted from the first retention system.

15. A system for data retention, the system comprising:
a processing unit; and
a non-transitory computer-readable medium having stored thereon program instructions executable by the processing unit for:
obtaining, from a first retention system having a first retention policy associated therewith, surveillance data generated by surveillance of a location where a surveillance system is deployed;
identifying a level of interest in the surveillance data; and
in response to identifying, based on the level of interest, that at least part of the surveillance data is of interest, causing the at least part of the surveillance data to be stored in a second retention system, the second retention system having associated therewith a second retention policy different from the first retention policy.
